# EUROPÄISCHE PATENTSCHRIFT

(11) **EP 0 970 149 B1**
(45) Veröffentlichungstag und Bekanntmachung des Hinweises auf die Patenterteilung: **28.08.2002**
(21) Anmeldenummer: 98913688.2
(22) Anmeldetag: 09.03.1998
(51) Int. Cl.: C09B 48/00, C09D 11/00, D21H 21/28, C09B 67/26

(54) **WASSERLÖSLICHE CHINACRIDONE**
WATER-SOLUBLE QUINACRIDONES
QUINACRIDONES SOLUBLES DANS L'EAU

(30) Priorität: 19.03.1997 DE 19711443
(43) Veröffentlichungstag der Anmeldung: 12.01.2000
(73) Patentinhaber: BASF AKTIENGESELLSCHAFT, 67056 Ludwigshafen (DE)
(72) Erfinder: ETZBACH, Karl-Heinz, D-67227 Frankenthal (DE); KRANZ, Carolin, D-64646 Heppenheim (DE); SENS, Rüdiger, D-67069 Ludwigshafen (DE)
(74) Vertreter: Riedl, Peter, Dr.
(86) Internationale Anmeldenummer: EP9801353
(87) Internationale Veröffentlichungsnummer: WO98041582

(56) Entgegenhaltungen:
- EP-A- 0 064 631
- DE-B- 2 719 719
- GB-A- 2 236 536
- JP-B- 39 011 765
- JP-B- 46 010 069
- PATENT ABSTRACTS OF JAPAN vol. 017, no. 678 (C-1141), 13.Dezember 1993 & JP 05 222328 A (RICOH CO LTD), 31.August 1993, in der Anmeldung erwähnt
- DATABASE WPI Section Ch, Week 9602 Derwent Publications Ltd., London, GB; Class A97, AN 96-017455 XP002068130 & JP 07 292 305 A (TOYO INK MFG CO LTD)

## Beschreibung

Gegenstand der vorliegenden Erfindung ist die Verwendung wässriger Lösungen wasserlöslicher Chinacridone der allgemeinen Formel I 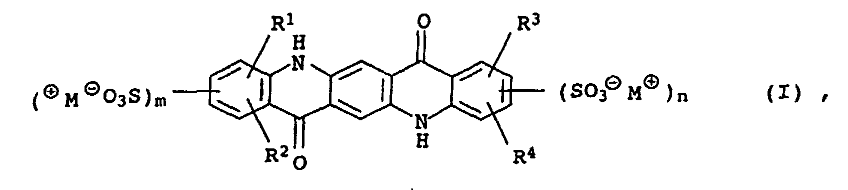 in der
- M^{⊕}: ein Lithium-, Natrium-, Kalium- oder unsubstituiertes Ammoniumkation,
- R¹, R², R³ und R⁴: unabhängig voneinander Wasserstoff, C₁-C₈-Alkyl, C₁-C₈-Alkoxy, Carboxy, C₁-C₄-Alkoxycarbonyl, Sulfamoyl, Mono- oder Di-(C₁-C₄)-alkylsulfamoyl, Carbamoyl, Mono- oder Di-(C₁-C₄)-alkylcarbamoyl, unsubstituiertes oder substituiertes Mono- oder Diphenylsulfamoyl, unsubstituiertes oder substituiertes Mono- oder Diphenylcarbamoyl, Halogen, Nitro oder Cyano,
- n: 0, 1 oder 2 und
- m: 0, 1 oder 2 bedeuten und die Summe n + m mindestens 1 ist,
zum Bedrucken von natürlichen und synthetischen Fasermaterialien im Inkjet-Druckverfahren. Außerdem betrifft die Erfindung lösliche Chinacridone mit unsubstituierten Ammoniumkation.

Aus der JP-A 5 004 019 und der JP-A 46 010 069 sind Pigmentmischungen mit Salzen primärer, sekundärer oder tertiärer Amine von sulfonierten Chinacridonen bekannt.

Ferner beschreibt die US-A 3 386 843 das Natriumsalz von sulfoniertem Chinacridon als Vorstufe zur Herstellung von Aluminiumchinacridonsulfonsäuren.

Ferner beschreibt die US-A 3 386 843 das Natriumsalz von sulfoniertem Chinacridon als Vorstufe zur Herstellung von Aluminiumchinacridonsulfonsäuren.

Diese Salze werden als Kristallisationsstörstoffe für Chinacridonpigmente eingesetzt, um deren Dispergiereigenschaften zu verbessern.

Die JP-A 05 222 328 offenbart Chinacridone mit 2-Carboxylbenzoylaminomethylensubstituenten in Farbmittelmischungen für den Inkjet-Druck.

Die JP-A-39011765 beschreibt alkohollösliche sulfonierte Chinacridone mit substituierten Ammoniumkationen als Gegenionen sowie deren Verwendung in Kugelschreibertinten, Nitrocelluloselacken und Druckpasten.

Die Verwendung von Chinacridonpigmenten in Tinten und Druckfarben ist allgemein bekannt, jedoch in der Regel mit dem Problem von instabilen Farbmittelmischungen behaftet. Dies kann zum Abscheiden von Feststoffen und damit zum Verstopfen von Düsen führen, die eine Verwendung von Chinacridonpigmenten in Aufzeichnungsflüssigkeiten wie Tinten oftmals unmöglich macht.

Verwendet man stattdessen lösliche Farbmittel, also Farbstoffe, in Tinten, so haben die Drucke meist mangelhafte Naßechtheiten.

Daher war es Aufgabe der vorliegenden Erfindung, Farbmittel für Inkjet-Färbeverfahren zur Verfügung zu stellen, die die Probleme des Standes der Technik lösen.

Demgemäß wurde die Verwendung der eingangs näher bezeichneten wässrigen Lösungen wasserlöslicher Chinacridone zum Bedrucken von natürlichen und synthetischen Fasermaterialien im Inkjet-Druckverfahren gefunden.

Die Chinacridone haben bis zu vier, bevorzugt drei, zwei oder eine Sulfogruppe, die in Form ihrer Anionen vorliegen. Besonders bevorzugt werden Chinacridone mit zwei Sulfogruppen.

Geeignete Kationen M^{⊕} sind Lithium-, Natrium-, Kalium- oder bevorzugt unsubstituierte Ammoniumionen.

Reste R¹, R², R³ und R⁴ sind z.B. Methyl, Ethyl, Propyl, Isopropyl, Butyl, Isobutyl, sec-Butyl, tert-Butyl, Pentyl, Isopentyl, Neopentyl, tert-Pentyl, Hexyl, 2-Methylpentyl, Heptyl, 1-Ethylpentyl, Octyl, 2-Ethylhexyl, Isooctyl (die obige Bezeichnung Isooctyl ist eine Trivialbezeichnung und stammt von den nach der Oxosynthese erhaltenen Alkoholen - vgl. dazu Ullmann's Encyclopedia of Industrial Chemistry, 5th Edition, Vol. A 1, Seiten 290 bis 293, sowie Vol. A 10, Seiten 284 und 285), Methoxy, Ethoxy, Propoxy, Isopropoxy, Butoxy, Isobutoxy, sec-Butoxy, tert-Butoxy, Methoxycarbonyl, Ethoxycarbonyl, Propoxycarbonyl, Isopropoxycarbonyl, Butoxycarbonyl, Isobutoxycarbonyl, sec-Butoxycarbonyl, tert-Butoxycarbonyl, Mono- oder Dimethylsulfamoyl, Mono- oder Diethylsulfamoyl, Mono- oder Dipropylsulfamoyl, Monooder Dibutylsulfamoyl, Mono- oder Dimethylcarbamoyl, Mono- oder Diethylcarbamoyl, Mono- oder Dipropylcarbamoyl, Mono- oder Dibutylcarbamoyl, Fluor, Chlor und Brom.

Die Reste R¹, R², R³ und R⁴ stehen weiterhin für substituiertes Mono- oder Diphenylsulfamoyl und Mono- oder Diphenylcarbamoyl, deren Phenylreste bevorzugt zwei, drei oder insbesonders einen Substituenten aus der Gruppe Nitro, Cyano, C₁-C₄-Alkoxycarbonyl und Carboxy tragen.

Die Chinacridone der Formel I tragen bevorzugt Substituenten R¹, R², R³ und R⁴ aus der Gruppe C₁-C₄-Alkyl, C₁-C₄-Alkoxy, Chlor, Sulfamoyl, Mono- oder Di-(C₁-C₄)-alkylsulfamoyl und Mono- oder Diphenylsulfamoyl.

Besonders bevorzugt werden Chinacridone der Formel I, in denen die Reste R² und R⁴ für Wasserstoff stehen.

Weiterhin bevorzugt werden Chinacridone der Formel I, bei denen der Rest R³ = R¹ und der Rest R⁴ = R² ist.

Bevorzugt werden Chinacridone der Formel I, in der n und m jeweils 1 bedeuten.

Die Herstellung von Chinacridonsulfonsäuren ist bekannt und wird in der US-A 3 386 843 beschrieben. Die Alkalisalze sind somit leicht durch Umsetzung der Säuren mit den entsprechenden Alkali hydroxyden erhältlich. Ebenfalls ausgehend von den Säuren können durch Umsetzung mit Ammoniak
oder quaternären Ammoniumsalzen die Ammoniumsalze erhalten werden. Die Umsetzung kann dabei in Wasser wie auch in polaren organischen Lösungsmitteln, z.B. Methanol, Ethanol, Aceton oder Dimethylformamid erfolgen.

Die erfindungsgemäßen Ammoniumsalze der allgemeinen Formel I, ir der M^{⊕} für NH₄^{⊕} steht, werden beispielsweise durch Umsetzung der Chinacridonsulfonsäuren mit einer wäßrigen konz. Ammoniaklösung vorteilhaft bei Raumtemperatur erhalten.

Es wurde gefunden, daß sich die wasserlöslichen Chinacridone I zum Färben und Bedrucken von natürlichen und synthetischen Faser materialien, wie Baumwolle, Wolle oder Polyamid im Inkjet-Druckverfahren eignen.

Beim Ink-Jet-Verfahren (Tintenstrahldruck-Verfahren) verwendet man üblicherweise wäßrige Tinten, die in kleinen Tröpfchen direk auf das Substrat gesprüht werden. Man unterscheidet dabei ein kontinuierliches Verfahren, bei dem die Tinte gleichmäßig durch eine Düse gepreßt und durch ein elektrisches Feld, abhängig vom zu druckenden Muster, auf das Substrat gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind z.B. in Text. Chem. Color, Band 19 (8), Seiten 23 bis 29, 1987, und Band 21 (6), Seiten 27 bis 32, 1989, beschrieben.

Die hierbei erhaltenen Färbungen oder Drucke zeichnen sich durch besonders gute Naß- und Abriebechtheiten aus. Sie sind nicht nur gegen Wasser, sondern ebenfalls gegen Milch, Seifenwasser, Natriumchloridlösung, Fruchtsäfte, gesüßte Mineralwasser und alkoholische Getränke beständig. Die diese Farbstoffe enthaltenden Tinten und Aufzeichnungsflüssigkeiten haben eine hervorragende Lagerstabilität und liefern Druckbilder von guter Schärfe, Brillanz und Echtheiten. Auch bei Lagerung der Tinten und Aufzeichnungsflüssigkeiten tritt keine Abscheidung auf, die zu einem Verstopfen von Düsen oder unscharfen Druckbildern führen kann.

Gegenstand der vorliegenden Erfindung sind auch Mischungen, z.B. Aufzeichnungsflüssigkeiten, die die Chinacridone der allgemeinen Formel I enthalten. Diese Aufzeichnungsflüssigkeiten können sowohl nur gelöste Farbstoffe, als auch zusätzlich Pigmente, beispielsweise C.I. Pigment Violet 19 oder C.I. Pigment Red 122 enthalten. Die Herstellung von Aufzeichnungsflüssigkeiten erfolgt nach an sich bekannten Verfahren. Die Aufzeichnungsflüssigkeiten enthalten im allgemeinen insgesamt 0,5 bis 15 Gew.-% eines oder mehrerer Farbstoffe der Formel I, 0 bis 99 Gew.-% Wasser und 0,5 bis 99,5 Gew.-% eines organischen wasserlöslichen Lösungsmittel, wobei die Summe aller Komponenten 100 ergibt. Geeignete Lösungsmittel sind z.B. ein- und mehrwertige Alkohole, deren Ether und Ester.

Geeignete Lösungsmittel sind z.B. Ethanol, Propanol, Isopropanol, Butanol, Isobutanol, tert.-Butanol; zwei- und dreiwertige Alkohole, insbesondere solche mit 2 bis 6 C-Atomen, z.B. Ethylenglykol, Propylenglykol, 1,3-Propandiol, 1,4-Butandiol, 1,5-Pentandiol, 1,6-Hexandiol, 1,2,6-Hexantriol, Glyzerin, Diethylenglykol, Dipropylenglykol; Polyalkylenglykole, wie z.B. Triethylenglykol, Polyethylenglykol, Tripropylenglykol, Polypropylenglykol; niedere Alkylether von mehrwertigen Alkoholen, wie z.B. Ethylglykolmono-methyl- oder -ethyl- oder -propyl- oder -butyl-ether, Diethylenglykol-mono-methyl- oder -ethyl-ether, Triethylenglykol-mono-methyl- oder -ethyl-ether; Ketone und Ketoalkohole, insbesondere solche mit 3 bis 7 C-Atomen, wie z.B. Aceton, Methylethylketon, Diethylketon, Methylisobutylketon, Methylpentylketon, cyclopentanon, Cyclohexanon, Diacetonalkohol; Ether, wie z.B. Dibutylether, Tetrahydrofuran, Dioxan; Ester, wie z.B. Ethylformiat, Methylformiat, Methylacetat, Ethylacetat, Propylacetat, Butylacetat, Phenylacetat, Ethylenglykol-mono-ethyletheracetat, Essigsäure-2-hydroxyethylester; Amide, wie z.B. Dimethylformamid, Dimethylacetamid, N-Methylpyrrolidon; ferner Harnstoff, Tetramethylharnstoff, Thiodiglykol.

Weiter können die Aufzeichnungsflüssigkeiten übliche Zusatzstoffe enthalten, z.B. Konservierungsmittel, wie z.B. Phenol-Derivate, kationische, anionische oder nichtionische oberflächenaktive Substanzen (Netzmittel), sowie Mittel zur Regulierung der Viskosität, z.B. Polyvinylalkohol, Cellulosederivate, Zuckerderivate oder wasserlösliche natürliche oder künstliche Harze als Filmbildner bzw. Bindemittel zur Erhöhung der Haft- und Abriebfestigkeit.

Amine, wie z.B. Ethanolamin, Diethanolamin, Triethanolamin, N,N-Dimethylethanolamin, Diisopropylamin dienen hauptsächlich zur Erhöhung des pH-Wertes der Aufzeichnungsflüssigkeit. Sie sind in der Regel zu 0 bis 10 Gew.-%, vorzugsweise 0,5 bis 5 Gew.-% in der Aufzeichnungsflüssigkeit vorhanden.

Bei Aufzeichnungsflüssigkeiten für das Tintenstrahl-Druckverfahren können je nach der Ausführungsform dieses Druckverfahrens, z.B. als Continuous-jet-, Intermittent-jet-, Impulse-jet- oder Compound-jet-Verfahren, gegebenenfalls noch weitere Additive, z.B. zur Pufferung des pH-Wertes, zur Einstellung der elektrischen Leitfähigkeit, der spezifischen Wärme, des thermischen Expansionskoeffizienten, zugesetzt werden.

Die Aufzeichnungsflüssigkeiten lassen sich in einfacher Weise durch Vermischen der Komponenten herstellen, was z.B. so erfolgen kann, daß ein oder mehrere Farbstoffe der allgemeinen Formel I in Wasser und/oder Lösungsmittel gelöst werden oder auch so, daß eine bei der Herstellung des Farbstoffs der allgemeinen Formel I anfallende wäßrige Lösung gegebenenfalls nach geeigneter Vorbereitung im gewünschten Maße verdünnt wird, und daß dann weitere Komponenten, wie Wasser, Lösungsmittel, Zusatzstoffe etc., zugemischt werden.

Die einen oder mehrere Farbstoffe der allgemeinen Formel I enthaltenden Aufzeichnungsflüssigkeiten eignen sich hervorragend zum Einsatz bei dem Tintenstrahl-Druckverfahren.

Die Anmeldung umfaßt ferner neue Chinacridone der allgemeinen Formel II 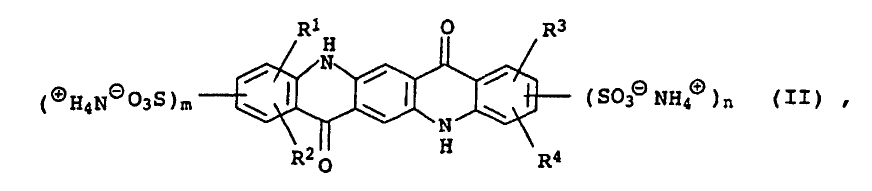 in der R¹, R², R³, R⁴, m und n die in Anspruch 1 genannte Bedeutung haben und die Summe von n + m mindestens 1 ist.

Bevorzugte Reste R¹, R², R³ und R⁴ sind die bereits für die Chinacridone der Formel I genannten. Ebenso gelten für die Chinacridone II dieselben Bevorzugungen.

Die neuen Chinacridone eignen sich zum Färben und Bedrucken von natürlichen und synthetischen Fasermaterialien. Die vorliegende Erfindung umfaßt ebenfalls Mischungen enthaltend Chinacridone der allgemeinen Formel II, insbesondere Aufzeichnungsflüssigkeiten.

### Herstellung der Farbstoffe

### Beispiel 1

14,6 g des in der US-Patentschrift 3 386 843 beschriebenen Diphenylaminoterephthalsäurederivates 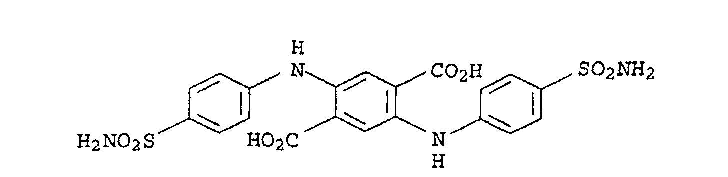 wurden unter Rühren in 292 g Polyphosphorsäure eingetragen und die Mischung anschließend 6 Stunden auf 160°C erhitzt. Danach ließ man abkühlen und fällte die violette Lösung auf 1000 ml eisgekühltes Methanol. Der entstandene Niederschlag wurde abgesaugt, mit Methanol gewaschen und getrocknet. Die so erhaltene Chinacridon-2,9-disulfonsäure wurde mit 50 ml wässriger konz. Ammoniaklösung 2 Stunden bei Raumtemperatur verrührt. Anschließend wurde das Bisammoniumsalz durch Zugabe von Aceton gefällt und isoliert. Zur weiteren Reinigung löste man es erneut in wenig Wasser und fällte es mit Aceton aus. Nach dem Trocknen erhielt man 8,1 g der Verbindung der Formel

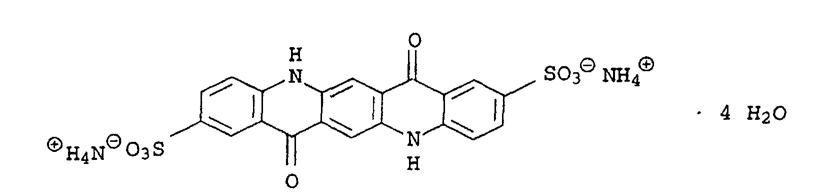

| Analyse: C₂₀H₂₆O₁₂N₄S₂, MG 578,6 | | | | | |
|---|---|---|---|---|---|
| | C | H | O | N | S |
| Ber. | 41,52 | 4,53 | 33,18 | 9,68 | 11,08 |
| Gef. | 41,6 | 4,2 | 32,5 | 10,0 | 10,8 |

UV(H₂O): λ: 532 nm (ε: 5800), 502 nm (ε: 6430)

Die Herstellung der Alkalimetallsalze und weiterer Ammoniumsalze erfolgte analog durch Neutralisation der Chinacridondisulfonsäure mit Alkalimetallhydroxiden oder Aminen. Die Reaktion kann in Wasser oder in organischen Lösungsmitteln wie z.B. Methanol, Ethanol, Aceton oder DMF erfolgen.

### Beispiel 2

Das nach US-A 3 386 843 hergestellte Dinatriumsalz der Chinacridon-2,9-disulfonsäure wurde durch zweimaliges Lösen in möglichst wenig Wasser und anschließendem Ausfällen mit Ethanol gereinigt. 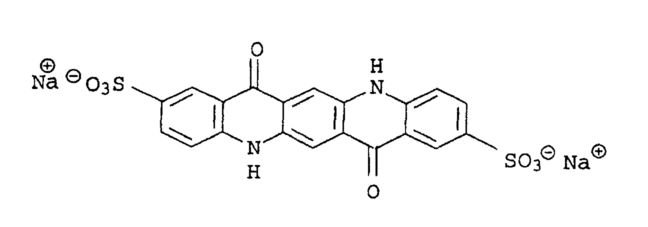 UV(H₂O) : λ: 528 nm (ε: 4480), 498 nm (ε: 4980)

### Anwendungsbeispiel

Es wurde eine 3 Gew.-%ige Lösung aus 0,3 g des unter Beispiel 1 hergestellten Farbstoffs und 9,7 g einer 10 gew.-%igen wäßrigen N-Methylpyrolidonlösung hergestellt, indem die Mischung 2 Stunden bei Raumtemperatur gerührt wurde.

Anschließend wurde die auf diese Weise erhaltene Tinte mit einem Inkjet-Drucker nach dem Bubble-Jet-Verfahren verdruckt.

Man erhielt Drucke mit guten anwendungstechnischen Eigenschaften.

## Patentansprüche

1. Verwendung wässiger Lösungen wasserlöslicher Chinacridone der allgemeinen Formel I 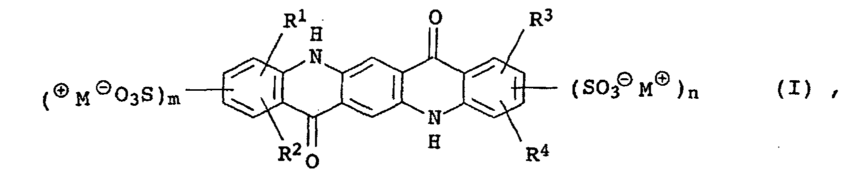 in der
M^{⊕} ein Lithium-, Natrium-, Kalium- oder unsubstituiertes Ammoniumkation,
R¹, R², R³ und R⁴ unabhängig voneinander Wasserstoff, C₁-C₈-Alkyl, C₁-C₈-Alkoxy, Carboxyl, C₁-C₄-Alkoxycarbonyl, Sulfamoyl, Mono- oder Di-(C₁-C₄)-alkylsulfamoyl, Carbamoyl, Mono- oder Di-(C₁-C₄)-alkylcarbamoyl, unsubstituiertes oder substituiertes Mono- oder Diphenylsulfamoyl, unsubstituiertes oder substituiertes Mono- oder Diphenylcarbamoyl, Halogen, Nitro oder Cyano,
n 0, 1 oder 2 und
m 0, 1 oder 2 bedeuten und die Summe n + m mindestens 1 ist,
zum Bedrucken von natürlichen und synthetischen Fasermaterialien im Inkjet-Druckverfahren.

2. Verwendung nach Anspruch 1, **dadurch gekennzeichnet, daß** M^{⊕} ein unsubstituiertes Ammoniumkation ist.

3. Wässrige Aufzeichnungsflüssigkeit, enthaltend
0,5 - 15 Gew.-% eines Chinacridons der in Anspruch 1 angegebenen Formel I,
bis zu 99 Gew.-% Wasser,
wenigstens 0,5 Gew.-% eines organischen wasserlöslichen Lösungsmittels.

4. Chinacridone der allgemeinen Formel II 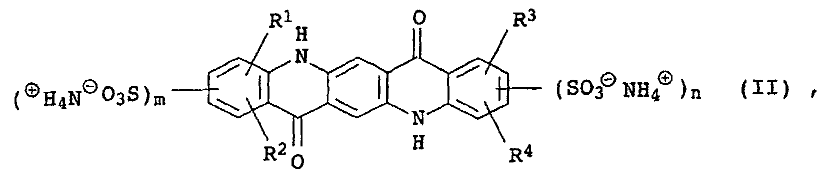 in der R¹, R², R³, R⁴, m und n die in Anspruch 1 genannte Bedeutung haben und die Summe n + m mindestens 1 ist.

## Claims

1. The use of aqueous solutions of water-soluble quinacridones of the formula I 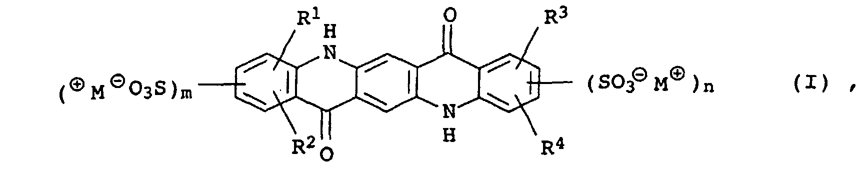 where
M^{⊕} is a lithium, sodium, potassium or unsubstituted ammonium cation,
R¹, R², R³ and R⁴ independently are hydrogen, C₁-C₈-alkyl, C₁-C₈-alkoxy, carboxyl, C₁-C₄-alkoxycarbonyl, sulfamoyl, mono- or di-(C₁-C₄)-alkylsulfamoyl, carbamoyl, mono- or di-(C₁-C₄)-alkylcarbamoyl, unsubstituted or substituted mono- or diphenylsulfamoyl, unsubstituted or substituted mono- or diphenylcarbamoyl, halogen, nitro or cyano,
n is 0, 1 or 2, and
m is 0, 1 or 2 and the sum n + m is at least 1,
for printing natural and synthetic fiber material in the inkjet printing process.

2. The use as claimed in claim 1, wherein M^{⊕} is an unsubstituted ammonium cation.

3. An aqueous recording liquid comprising
0.5 - 15% by weight of a quinacridone of the formula I as set forth in claim 1,
up to 99% by weight of water,
at least 0.5% by weight of a water-soluble organic solvent.

4. A quinacridone of the formula II 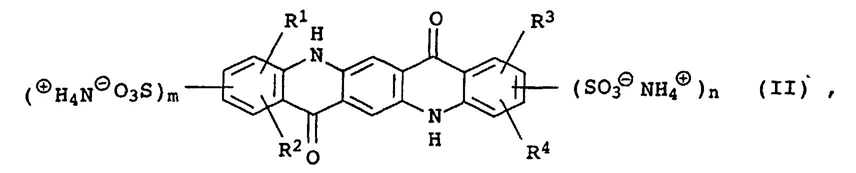 where R¹, R², R³, R⁴, m and n are as defined in claim 1 and the sum n + m is at least 1.

## Revendications

1. Mise en oeuvre des solutions aqueuses de quinacridones solubles dans l'eau de formule générale I 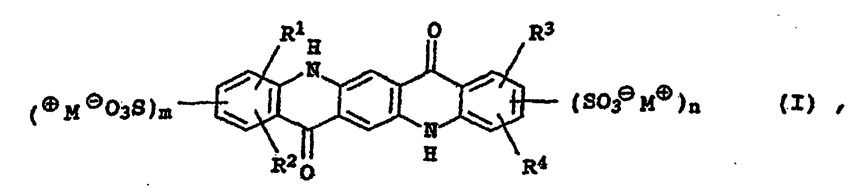 dans laquelle
M⁺ représente un cation de lithium, de sodium, de potassium ou d'ammonium non substitué,
R¹, R², R³ et R⁴ représentent, indépendamment les un des autres, un atome d'hydrogène, un groupe alkyle en C₁ à C₈, alcoxy en C₁ à C₈, carboxyle, alcoxycarbonyle en C₁ à C₄, sulfamoyle, mono-(alkyle en C₁ à C₄)-sulfamoyle ou di-(alkyle en C₁ à C₄)-sulfamoyle, carbamoyle, mono-(alkyle en C₁ à C₄)-carbamoyle ou di-(alkyle en C₁ à C₄)-carbamoyle, monophénylsufamoyle ou diphénylsulfamoyle non substitués ou substitués, un atome d'halogène, un groupe nitro ou cyano,
n vaut 0, 1 ou 2 et
m vaut 0, 1 ou 2 et la somme n + m vaut au moins 1.
pour l'impression sur les matériaux en fibres naturelles ou synthétiques, au moyen du procédé d'impression à jet d'encre.

2. Mise en oeuvre selon la revendication 1, **caractérisée en ce que** M⁺ est un cation d'ammonium non substitué.

3. Liquide d'enregistrement aqueux contenant
une quinacridone de formule I qui est citée dans la revendication 1, à raison de 0,5% à 15% en poids,
l'eau à raison de jusqu'à 99% en poids et
un solvant organique et soluble dans l'eau à raison d'au moins 0,5% en poids.

4. Quinacridones de formule générale II 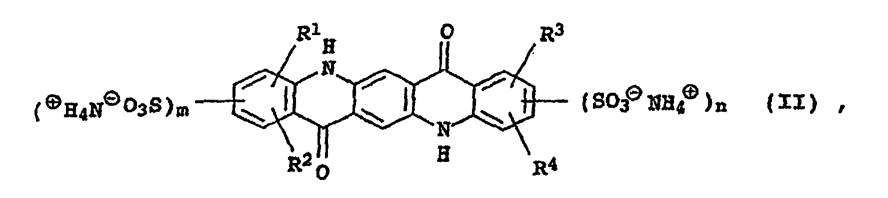 dans laquelle R¹, R², R³ R⁴, m et n prennent les significations citées dans la revendication 1, la somme n + m valant au moins 1.
